# EUROPÄISCHE PATENTSCHRIFT

(11) **EP 2 335 967 B1**
(45) Veröffentlichungstag und Bekanntmachung des Hinweises auf die Patenterteilung: **14.01.2015**
(21) Anmeldenummer: 10015360.0
(22) Anmeldetag: 07.12.2010
(51) Int. Cl.: B60M 1/04, B60M 1/30

(54) **Abstandshalter für Stromschienensystem**
Distancer for an electric rail system
Pièce intercalaire pour système de barres conductrices

(30) Priorität: 19.12.2009 DE 202009017145 U
(43) Veröffentlichungstag der Anmeldung: 22.06.2011
(73) Patentinhaber: Rehau AG + Co, 95111 Rehau (DE)
(72) Erfinder: Meinel, Udo, 95111 Rehau (DE); Künzel, Werner, 95111 Rehau (DE)

(56) Entgegenhaltungen:
- DE-A1- 2 852 168
- DE-A1-102005 050 835

## Beschreibung

Die Erfindung betrifft ein Stromschienensystem umfassend wenigstens eine Stromschiene, wenigstens ein Abdeckelement sowie wenigstens einen Abstandshalter, wobei der Abdeckelement wenigstens ein Klemmelement aufweist und wobei der Abstandshalter wenigstens ein Rastelement, welches mit dem Klemmelement des Abdeckelementes, diese verbindend, in Wirkverbindung steht.

Derartige Abstandshalter für Stromschienensysteme sind im Stand der Technik seit langem beschrieben.

So beschreibt beispielsweise die DE 7018332 einen Abstandshalter für ein Stromschienensystem.

Dieser Abstandshalter ist als winkelförmiger Hohlkörper ausgebildet, mittels angeformter Nasen durch eine Drehung auf der Stromschiene selbstschließende Riegel ausgestaltet, auf die eine die Verriegelung fixierende Abdeckhaube aus Kunststoff sowie eine seitliche Abdeckplatte aus Kunststoff aufgerastet sind. Dabei soll die Abdeckhaube mittels angeformter Klemmansätze auf den an den Riegeln angeformten Nasen aufgerastet sein. Die Abstandshalter sind dabei als im bekannten Blasverfahren hergestellte Hohlkörper ausgebildet.

Diese Abstandshalter für ein Stromschienensystem haben sich bereits über viele Jahre bewährt und weisen gegenüber den bisher aus Holz oder anderen korrosionsanfälligen Werkstoffen hergestellten Abdecksystemen viele Vorteile auf.

Im Rahmen der Entwicklung sind jedoch die Anforderungen an die Festigkeit dieser Abstandshalter gestiegen, wobei gleichzeitig insbesondere die erforderlichen Montagezeiten sowie die Herstellungskosten reduziert werden müssen.

Parallel dazu war auch eine Funktionsoptimierung hinsichtlich eines Längenausgleiches erforderlich, sowie ein Toleranzausgleich.

Die Abstandshalter für moderne Stromschienensysteme müssen so hergestellt bzw. konstruiert sein, dass sie so multifunktional einsetzbar sind, dass die Montage zu allen Jahreszeiten einfach, schnell und ohne Verwechslungen realisierbar ist, dass die montierten Stromschienensysteme den langjährigen Belastungen standhalten und jederzeit schnell und reversibel reparierbar bzw. austauschbar sind.
Gemäss dem Oberbegriff des Anspruchs 1 offenbart die DE 10 2005 050 835 A1 eine Halterung zur Befestigung wenigstens eines Leitungsabschnitts eines der induktiven Energieübertragung dienenden Primärleiters am Fahrweg einer Magnetschwebebahn, wobei sie zwei parallel und hintereinander angeordnete, in einem mittleren Bereich schwenkbar miteinander verbundenen Klemmplatten aufweist, die an einer Seite wenigsten je eine, eine Aufnahme für den Leitungsabschnitt bildende Klemmbacke enthalten, die durch relative Verschwenkung der beiden Klemmplatten in ein zur Fixierung des Leitungsabschnitts durch Klemmung bestimmte Schließstellung und eine das Einlegen des Leitungsabschnitts in die Aufnahme ermöglichte Offenstellung bringbar sind und das die Klemmplatten zur ihrer Verriegelung in der Schließstellung bestimmte Verriegelungsmittel sowie an einer von dem Klemmbacken abgewandte Seite zu ihrer Befestigung am Fahrweg bestimmte Befestigungsmittel aufweisen. Die Befestigungsmittel an den Klemmplatten sind Rastelemente die unter Bildung einer Schnappverbindung mit Halteleisten verrasten. Die Montage der Klemmplatten am Fahrweg erfolgt mithilfe einer Montageplatte und eines von dieser seitlich nach außen stehenden Führungselements, an dem die Haltenasen angeordnet sind.

Hier setzt die Erfindung ein, die sich die Aufgabe gestellt hat, die Nachteile des bisher bekannten Standes der Technik zu überwinden und ein Stromschienensystem aufzuzeigen, das kostengünstig und wirtschaftlich herstellbar ist, das schnell und nicht verwechselbar montierbar ist und das einen sicheren sowie störungsfreien Dauerbetrieb ermöglicht.

Erfindungsgemäß wird diese Aufgabe durch die Merkmale des Anspruches 1 gelöst. Weitere vorteilhafte Ausgestaltungen der Erfindung sind in den Unteransprüchen beschrieben.

Es hat sich überraschend herausgestellt, dass für ein Stromschienensystem umfassend wenigstens eine Stromschiene, wenigstens ein Abdeckelement sowie wenigstens einen Abstandshalter, wobei das Abdeckelement wenigstens ein Klemmelement aufweist und wobei der Abstandshalter wenigstens ein Rastelement, welches mit dem Klemmelement des Abdeckelementes, diese verbindend, in Wirkverbindung steht, dass der Abstandshalter durch zwei über eine Traverse verbundene Trägerelemente gebildet ist, wobei die Traverse wenigstens zwei miteinander kraftschlüssig und / oder stoffschlüssig verbundene Traversenelemente aufweist, sich dadurch auszeichnet, dass wenigstens ein Traversenelement wenigstens ein Halteelement aufweist, wobei das als Rasthaken ausgebildet Halteelement eine Aufnahmeöffnung des Traversenelementes rastend hintergreift. Durch diese Ausgestaltung ist es möglich, einen Abstandshalter für ein Stromschienensystem zur Verfügung zu stellen, der leicht und unverwechselbar auf der Stromschiene montierbar ist und an den die jeweiligen Abdeckelemente schnell und unverschiebbar montierbar sind. Ein weiterer Vorteil des erfindungsgemäßen Abstandshalters für ein Stromschienensystem wird darin gesehen, dass die montierten Abdeckelemente, die teilweise über mehrere Kilometer aneinander angeordnet an den Abstandshaltern fixiert sind, sich bei temperaturbedingten Längenänderungen nicht mehr über die Abstandshalter selbst schieben und sich nicht verformen bzw. deformieren.

Weiterhin vorteilhaft wird gesehen, dass der Abstandshalter sehr leicht auf einer Stromschiene montierbar ist und durch das Ineinanderverschieben sowie Verrasten exakt positioniert und kraftschlüssig anordenbar ist.

Durch diese vorteilhafte Ausgestaltung des Abstandshalters ist es aber auch möglich, den Abstandshalter bei Sanierungs- bzw. Reparaturaufgaben reversibel von der Stromschiene zu entfernen.

Das Stromschienensystem zeichnet sich weiterhin dadurch aus, dass die Traversenelemente durch Rast-, Schnapp-, Klickverbindungen kraftschlüssig miteinander verbunden sind. Hierdurch wird insbesondere eine mögliche Demontage jederzeit problemlos ermöglich.

Es hat sich weiterhin als vorteilhaft herausgestellt, dass bei dem erfindungsgemäßen Stromschienensystem die Traversenelemente durch Schweiß-Klebstoffverbindungen stoffschlüssig miteinander verbunden sind. Hierdurch ist es insbesondere bei sehr hohen Anforderungen an die Steifigkeit und Festigkeit möglich, diese entsprechend den technischen Anforderungen auch optimal umzusetzen.

Dabei hat es sich weiterhin als vorteilhaft herausgestellt, dass das erfindungsgemäße Stromschienensystem wenigstens ein Traversenelement aufweist, welches Mittel zur Trennung bzw. Demontage der Traversenelemente des Abstandshalters beinhaltet. Dies ist insbesondere bei den kraftschlüssigen Verbindungen der Traversenelemente des erfindungsgemäßen Abstandshalters optimal.

In einer ebenfalls vorteilhaften Ausgestaltungsform des Abstandshalters weist das Trägerelement an seiner der Stromschiene gegenüberliegenden Seite wenigstens ein von der Traverse beabstandet angeordnetes zweites Klemmelement auf. Hierdurch wird eine einfache, aber sichere und stabile Montage des Abstandshalters auf der Stromschiene ermöglicht.

Es wird weiterhin vorteilhaft gesehen, dass das erfindungsgemäße Stromschienensystem so gestaltet ist, dass die Traverse und / oder das Trägerelement auf einem freien Ende der Stromschiene abstützend angeordnet sind. Hierdurch ist es möglich, dass bei der Montage die Abstandshalter auf den jeweiligen Stromschienen über die Fläche der Traversen und / oder des Trägerelementes auf den entsprechenden Flächen der Stromschienen aufliegen und dem ganze Stromschienensystem nach der beispielsweise kraftschlüssigen Verbindung die erforderliche Stabilität verleihen.

Dabei kann es von Vorteil sein, wenn das Traversenelement dabei Doppel-T-förmig ausgebildet ist und zumindest eine U-förmige und / oder L-förmige Komponente aufweist.

Insbesondere bei einer kraftschlüssigen Verbindung der Traversenelemente des erfindungsgemäßen Stromschienensystemes ist das Mittel zur Trennung der beiden Traversenelemente zwischen den T-förmigen Bereichen des Traversenelementes angeordnet.

Weiterhin ist in einer vorteilhaften Ausgestaltung des Abstandshalters wenigstens ein Traversenelement so ausgestaltet, dass es ein Halteelement aufweist. Dies führt vorteilhafterweise dazu, dass die Herstellung der erfindungsgemäßen Stromschienensysteme reduziert werden können, während gleichzeitig die Montage der beiden Traversenelemente zu einem Abstandshalter und der entsprechenden kraftschlüssigen Verbindung jederzeit problemlos möglich ist.

Dabei sind in einer weiteren vorteilhaften Ausgestaltungsform die Halteelemente der Traversenelemente als Rasthaken, Rastnasen und dergleichen ausgebildet.

Es liegt jedoch auch im Rahmen der Erfindung, dass die Halteelemente des Traversenelementes hinterschnittig, schwalbenschwanzförmig und dergleichen ausgebildet sind.

Es hat sich weiterhin ebenfalls als vorteilhaft herausgestellt, dass die Mittel zur Trennung / Demontage der Traversenelemente des Abstandshalters beabstandet zum jeweiligen Halteelement angeordnet sind.

Dabei können die Mittel beispielsweise als neben dem Halteelement angeordnete Hebel ausgebildet sein, was insbesondere bei der Montage bzw. Demontage der erfindungsgemäßen Abstandshalter für Stromschienensysteme die Funktionalität entsprechend verbessert.

Das erfindungsgemäße Stromschienensystem zeichnet sich auch dadurch aus, dass das als Rasthaken ausgebildete Halteelement des Traversenelementes eine Aufnahmeöffnung des Traversenelementes rastend hintergreift. Hier ist es durch einfache geometrische Ausgestaltung der Traversenelemente des Abstandshalters möglich, diesen einerseits kostengünstig herzustellen und andererseits eine ausreichende Festigkeit des aus den Traversenelementen montierten erfindungsgemäßen Stromschienensysteme zu gewährleisten.

Weiterhin weist das erfindungsgemäße Stromschienensystem ein Befestigungselement auf. Dieses beispielsweise am Trägerelement angeordnete Befestigungselement ermöglicht es in vorteilhafter und einfacher Weise, dass die am Abstandshalter angeordneten Abdeckelemente durch eine Verschraubung, welche durch die Wand der Abdeckelemente in das Befestigungselement hineinführt bzw. durch Verklebungen stoffschlüssig zwischen der Fläche des Befestigungselementes und des anliegenden Abdeckelementes fixierbar und unverrückbar anordenbar sind.

Die Erfindung soll nun an Ausführungsbeispielen, die diese nicht einschränken, näher beschrieben werden.

Es zeigen:
- Fig. 1: Vorderansicht eines Stromschienensystems umfassend eine Stromschiene, zwei Abdeckelemente sowie einen Abstandshalter
- Fig. 2: perspektivische Darstellung eines Trägerelementes des Abstandshalters des erfindungsgemäßen Stromschienesystems
- Fig. 3: perspektivische Darstellung eines weiteren Trägerelementes des Abstandshalters des erfindungsgemäßen Stromschienesystems.

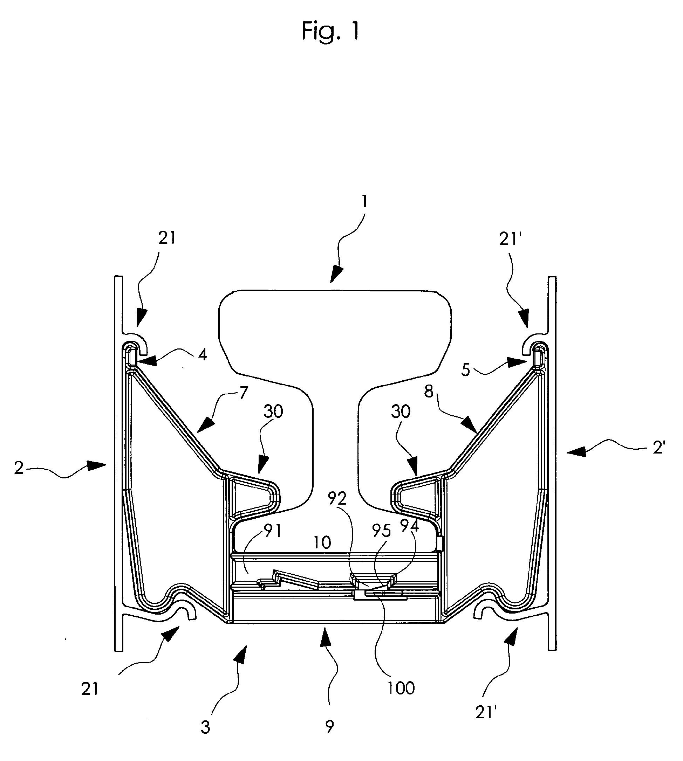

In der Fig. 1 ist eine Vorderansicht eines Stromschienensystems umfassend eine Stromschiene 1, zwei Abdeckelemente 2,2' sowie ein Abstandshalter 3 dargestellt. Die Stromschiene 1 weist dabei eine etwa Doppel-T-förmige Kontur auf, wobei am freien Ende 10 der Stromschiene 1 der Abstandshalter 3 angeordnet ist. Der Abstandshalter 3 weist zwei über eine Traverse 9 verbundene Trägerelemente 7,8 auf, wobei die Trägerelemente 7,8 über zwei miteinander kraftschlüssig verbundene Traversenelemente 91,94 und dem dritten Klemmelement 30 mit dem freien Ende 10 der Stromschiene 1 verbunden ist. Das Abdeckelement 2,2' weist ein Klemmelement 21,21' auf, welche mit dem Rastelement 4,5 des Abstandshalters 3 kraftschlüssig verbunden sind.

Der erfindungsgemäße Abstandshalter 3 lässt sich somit schnell und bei Bedarf reversibel an der Stromschiene 1 befestigen, in dem die Trägerelemente 7,8 einander gegenüberliegend angeordnet über die Traversenelemente 91,94 aufeinander zugeschoben werden, bis durch entsprechende Rast-, Schnapp-, Klickverbindungen die kraftschlüssige Verbindung realisiert ist.

Der Abstandshalter 3 weist in diesem Ausführungsbeispiel ein Mittel 100 auf, welches zur nachträglichen Trennung bzw. Demontage dient. Dieses als Hebel ausgebildet Mittel 100 führt dazu, dass die durch das zweite Rastelement 95 in der ersten Vertiefung 92 des Traversenelementes 9 hergestellte kraftschlüssige Verbindung durch einen Druck auf den als Hebel ausgebildeten Mittel 100 wieder lösbar ist.

Das Traversenelement 9 und das Halteelement 7,8 sind in diesem Ausführungsbeispiel Doppel-T-förmig ausgebildet.

In diesem Ausführungsbeispiel weist der Abstandshalter 3 weiterhin ein Halteelement 95 auf.

Es liegt jedoch auch im Rahmen der Erfindung, dass das Traversenelement 91,94 der Traverse 9 mehrere Halteelemente aufweist.

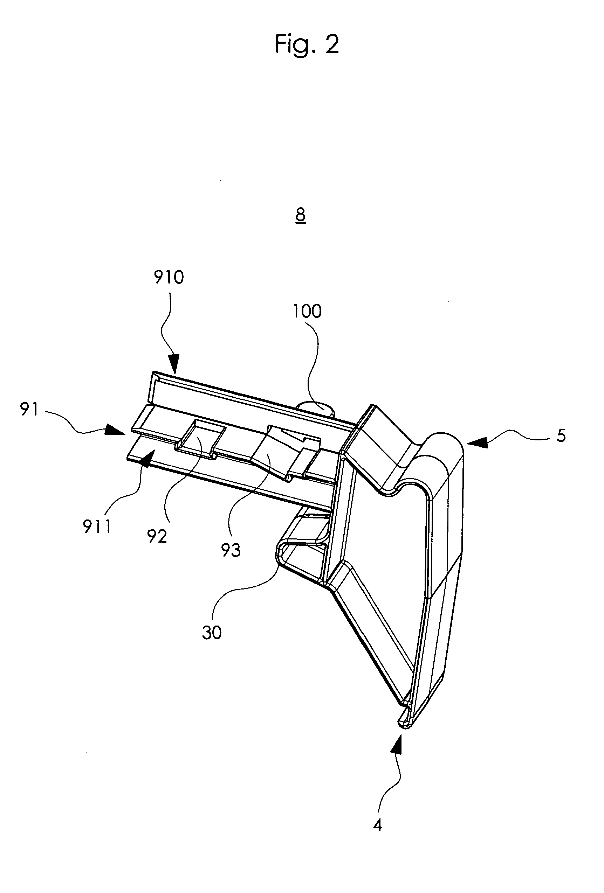

In der Fig. 2 ist eine perspektivische Darstellung des Trägerelementes 8 Abstandshalters 3 des erfindungsgemäßen Stromschienensystems dargestellt. Das Trägerelement 8 weist Rastelemente 4,5 auf, die dazu dienen das in der Fig. 1 dargestellte Abdeckelement 2,2' kraftschlüssig aufzunehmen. Das Trägerelement 8 ist in diesem Ausführungsbeispiel Doppel-T-förmig ausgebildet und weist gegenüber dem Rastelement 5 das Traversenelement 91 auf.

Das Traversenelement 91 ist in diesem Ausführungsbeispiel durch ein etwa L-förmiges Element 910 und ein daran stoffschlüssig angeordnetes U-förmiges Element 911 gebildet. Das U-förmige Element 911 des Traversenelementes 91 weist an seinem einen Schenkel eine erste Vertiefung 92 und eine zweite Vertiefung 93 auf. Die erste Vertiefung 92 ist dabei etwa prismatisch ausgebildet und um etwa eine Wandstärke des U-förmigen Elementes 911 nach unten versetzt angeordnet. Die zweite Vertiefung 93 des U-förmigen Elementes 911 ist stufenförmig ausgebildet und mit einer von der Seitenkante des U-förmigen Elementes 911 angeordneten Schräge versehen.

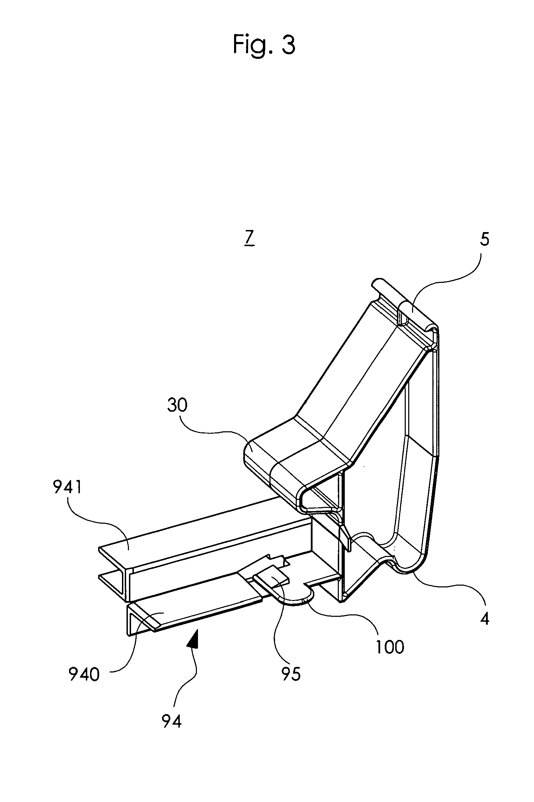

Das L-förmige Element 910 weist die gleiche Kontur auf wie das in der Fig. 3 beschriebene L-förmige Element 941. Am Trägerelement 8 ist gegenüber dem Traversenelement 91 das dritte Klemmelement 30 angeordnet, welches in diesem Ausführungsbeispiel Doppel-T-förmig gestaltet ist.

Es liegt jedoch auch im Rahmen der Erfindung, dass die erste Vertiefung 92 bzw. die zweite Vertiefung 93 an einem anderen Schenkel des U-förmigen Elementes 911 und / oder an dem L-förmigen Elemente 910 angeordnet sind. Die Kontur der ersten Vertiefung 92 bzw. der zweiten Vertiefung 93 kann hierbei auch in anderen Geometrien ausgebildet sein. Das am L-förmigen Element 910 des Traversenelementes 91 angeordnete Mittel 100 wird ausführlich in der Fig. 3 beschrieben.

Die Fig. 3 zeigt eine perspektivische Darstellung des Trägerelementes 7 des Abstandshalters 3 des erfindungsgemäßen Stromschienensystems. Das Trägerelement 7 weist zwei einander gegenüberliegend angeordnete Rastelemente 4,5 auf, an die das hier nicht dargestellte Abdeckelement 2,2' kraftschlüssig anordenbar ist.

Gegenüber dem Rastelement 5 ist das zweite Klemmelement 30 angeordnet dem wiederum gegenüberliegend das zweite Traversenelement 94 angeordnet ist.

Das zweite Traversenelement 94 weist ebenfalls ein etwa U-förmiges Element 941 sowie ein L-förmiges Element 940 auf. Das U-förmige Element 941 und das L-förmige Element 940 sind miteinander und am Trägerelement 8 stoffschlüssig verbunden. Es liegt jedoch auch im Rahmen der Erfindung, dass das U-förmige Element 941 und / oder das L-förmige Element 940 kraftschlüssig miteinander verbunden sind.

Auch das zweite Traversenelement 94 kann dabei kraftschlüssig mit dem Trägerelement 7 des Abstandshalters 3 verbunden sein. In diesem Ausführungsbeispiel ist am L-förmigen Element 940 des zweiten Traversenelementes 94 das zweite Rastelement 95 angeordnet. Das zweite Rastelement 95 ist dabei als Rasthaken ausgebildet.

Das Mittel 100 ist beabstandet zum Halteelement 95 des zweiten Traversenelementes 94 angeordnet und etwa halbkreisförmig ausgebildet. In diesem Ausführungsbeispiel weisen das U-förmige Element 941 und das L-förmige Element 940 des zweiten Traversenelementes 94 die gleiche Geometrie bzw. Kontur auf wie das U-förmige Element 911 und das L-förmige 910 des ersten Traversenelementes 91.

Die in der Fig. 1 dargestellten Montage- und Einbausituation des erfindungsgemäßen Abstandshalters 3 an der Stromschiene 1 wird dabei so herbeigeführt, dass das Trägerelement 7 und das Trägerelement 8 einander gegenüberliegend angeordnet über die Traversenelemente 91,94 miteinander in Wirkverbindung gebracht werden und so gegeneinander verschoben werden, dass das U-förmige Element 911 des ersten Traversenelementes 91 unterhalb des L-förmigen Elementes 940 des zweiten Traversenelementes 94 entlang gleitet, während das L-förmige Element 910 des ersten Traversenelementes 91 auf dem U-förmigen Element 941 des zweiten Traversenelementes 94 entlang gleitet.

Die Trägerelemente 7,8 werden dabei so lange einander gegenüberliegend zusammengeschoben, bis das zweite Rastelement 95 des zweiten Traversenelementes 94 in der ersten Vertiefung 92 des ersten Traversenelementes 91 des Trägerelementes 8 einrastet.

Das zweite Rastelement 95 des zweiten Traversenelementes 94 ist dabei als Rasthaken ausgebildet und hintergreift rastend die als erste Vertiefung 92 ausgebildete Aufnahmeöffnung. Es liegt jedoch auch im Rahmen der Erfindung, dass das als Rasthaken ausgebildete Halteelement 95 andere Geometrien aufweisen kann bzw. auch hinterschnittig, schwalbenschwanzförmig und dergleichen ausgebildet sein kann.

## Patentansprüche

1. Stromschienensystem umfassend wenigstens eine Stromschiene (1), wenigstens ein Abdeckelement (2,2') sowie wenigstens einen Abstandshalter (3), wobei das Abdeckelement (2,2') wenigstens ein Klemmelement (21,21') aufweist und wobei der Abstandshalter wenigstens ein Rastelement (4,5), welches mit dem Klemmelement (21,21') des Abdeckelementes (2,2'), diese verbindend, in Wirkverbindung steht, wobei der Abstandshalter (3) durch zwei über eine Traverse (9) verbundene Trägerelemente (7,8) gebildet ist, **dadurch gekennzeichnet, dass** die Traverse (9) wenigstens zwei miteinander kraftschlüssig verbundene Traversenelemente (91, 94) aufweist, und dass wenigstens ein Traversenelement (91, 94) wenigstens ein Halteelement (95) aufweist, wobei das als Rasthaken ausgebildete Halteelement (95) eine Aufnahmeöffnung (92, 93) des anderen Traversenelements (91,94) rastend hintergreift.

2. Stromschienensystem nach Anspruch 1, **dadurch gekennzeichnet, dass** die Traversenelemente (91, 94) durch Rast-, Schnapp-, Klickverbindungen kraftschlüssig miteinander verbunden sind.

3. Stromschienensystem nach Anspruch 1, **dadurch gekennzeichnet, dass** die Traversenelemente (91, 94) durch Schweiß-, Klebeverbindungen stoffschlüssig miteinander verbunden sind.

4. Stromschienensystem nach einem der vorhergehenden Ansprüche, **dadurch gekennzeichnet, dass** wenigstens ein Traversenelement (91, 94) Mittel (100) zur Trennung / Demontage der Traversenelemente (91, 94) des Abstandshalters (3) aufweist.

5. Stromschienensystem nach einem der vorhergehenden Ansprüche, **dadurch gekennzeichnet, dass** das Trägerelement (7,8) an seiner der Stromschiene (1) gegenüberliegenden Seite wenigstens ein von der Traverse (9) beabstandet angeordnetes zweites Klemmelement (30) aufweist.

6. Stromschienensystem nach einem der vorhergehenden Ansprüche, **dadurch gekennzeichnet, dass** die Traverse (9) etwas doppel-T-förmig ausgebildet ist.

7. Stromschienensystem nach einem der vorhergehenden Ansprüche, **dadurch gekennzeichnet, dass** die Mittel (100) zwischen den T-förmigen Bereichen angeordnet sind.

8. Stromschienensystem nach einem der vorhergehenden Ansprüche, **dadurch gekennzeichnet, dass** das Halteelement (95) des Traversenelemente (91, 94) als Rasthaken, Rastnasen und dergleichen ausgebildet sind.

9. Stromschienensystem nach einem der vorhergehenden Ansprüche, **dadurch gekennzeichnet, dass** das Halteelemente (95) des Traversenelementes (91, 94) hinterschnittig, schwalbenschwanzförmig und dergleichen ausgebildet sind.

10. Stromschienensystem nach einem der vorhergehenden Ansprüche, **dadurch gekennzeichnet, dass** die Mittel (100) beabstandet zum Halteelement (95) des Traversenelementes (91, 94) angeordnet sind.

11. Stromschienensystem nach einem der vorhergehenden Ansprüche, **dadurch gekennzeichnet, dass** die Mittel (100) als neben dem Halteelement (95) angeordneten Hebel ausgebildet sind.

## Claims

1. Busbar system comprising at least one busbar (1), at least one covering element (2, 2') and at least one spacer (3), wherein the covering element (2, 2') has at least one clamping element (21, 21'), and wherein the spacer has at least one latching element (4, 5) which is operatively connected to the clamping element (21, 21') of the covering element (2, 2') so as to connect the said covering elements, wherein the spacer (3) is formed by two carrier elements (7, 8) which are connected by means of a crossmember (9), **characterized in that** the crossmember (9) has at least two crossmember elements (91, 94) which are connected to one another in a force-fitting manner, and **in that** at least one crossmember element (91, 94) has at least one retaining element (95), wherein the retaining element (95), which is in the form of a latching hook, engages behind a receiving opening (92, 93) of the other crossmember element (91, 94) in a latching manner.

2. Busbar system according to Claim 1, **characterized in that** the crossmember elements (91, 94) are connected to one another in a force-fitting manner by latching, snapaction or click connections.

3. Busbar system according to Claim 1, **characterized in that** the crossmember elements (91, 94) are connected to one another in a cohesive manner by welded or adhesive connections.

4. Busbar system according to one of the preceding claims, **characterized in that** at least one crossmember element (91, 94) has means (100) for disconnecting/removing the crossmember elements (91, 94) of the spacer (3).

5. Busbar system according to one of the preceding claims, **characterized in that** the support element (7, 8) has, on its side which is situated opposite the busbar (1), at least one second clamping element (30) which is arranged at a distance from the crossmember (9).

6. Busbar system according to one of the preceding claims, **characterized in that** the crossmember (9) is designed somewhat in the form of a double T.

7. Busbar system according to one of the preceding claims, **characterized in that** the means (100) are arranged between the T-shaped regions.

8. Busbar system according to one of the preceding claims, **characterized in that** the retaining elements (95) of the crossmember elements (91, 94) are in the form of latching hooks, latching lugs and the like.

9. Busbar system according to one of the preceding claims, **characterized in that** the retaining elements (95) of the crossmember elements (91, 94) are designed with an undercut, in the form of a dovetail and the like.

10. Busbar system according to one of the preceding claims, **characterized in that** the means (100) are arranged at a distance from the retaining element (95) of the crossmember element (91, 94).

11. Busbar system according to one of the preceding claims, **characterized in that** the means (100) are designed as levers which are arranged next to the retaining element (95).

## Revendications

1. Système de barres conductrices comportant au moins une barre conductrice (1), au moins un élément de recouvrement (2, 2') ainsi qu'au moins une pièce intercalaire (3), l'élément de recouvrement (2, 2') comprenant au moins un élément de serrage (21, 21'), et la pièce intercalaire comprenant au moins un élément d'encliquetage (4, 5), lequel est en liaison fonctionnelle avec l'élément de serrage (21, 21') de l'élément de recouvrement (2, 2'), en reliant ceux-ci, la pièce intercalaire (3) étant formée par deux éléments de support (7,8) reliés par le biais d'une traverse (9), **caractérisé en ce que** la traverse (9) comprend au moins deux éléments de traverse (91, 94) reliés les uns aux autres par engagement par force, et **en ce qu'**au moins un élément de traverse (91, 94) comprend au moins un élément de retenue (95), l'élément de retenue (95) réalisé sous forme de crochet d'encliquetage venant en prise par l'arrière par encliquetage avec une ouverture de réception (92, 93) de l'autre élément de traverse (91, 94).

2. Système de barres conductrices selon la revendication 1, **caractérisé en ce que** les éléments de traverse (91, 94) sont reliés les uns aux autres par engagement par force au moyen de liaisons par encliquetage, par clipsage et à déclic.

3. Système de barres conductrices selon la revendication 1, **caractérisé en ce que** les éléments de traverse (91, 94) sont reliés les uns aux autres par liaison de matière au moyen de liaisons par soudage et adhésives.

4. Système de barres conductrices selon l'une quelconque des revendications précédentes, **caractérisé en ce qu'**au moins un élément de traverse (91, 94) comprend des moyens (100) de séparation/démontage des éléments de traverse (91, 94) de la pièce intercalaire (3).

5. Système de barres conductrices selon l'une quelconque des revendications précédentes, **caractérisé en ce que** l'élément de support (7,8) présente, sur son côté en regard de la barre conductrice (1), au moins un deuxième élément de serrage (30) disposé à distance de la traverse (9).

6. Système de barres conductrices selon l'une quelconque des revendications précédentes, **caractérisé en ce que** la traverse (9) est réalisée quelque peu en forme de T double.

7. Système de barres conductrices selon l'une quelconque des revendications précédentes, **caractérisé en ce que** les moyens (100) sont disposés entre les régions en forme de T.

8. Système de barres conductrices selon l'une quelconque des revendications précédentes, **caractérisé en ce que** les éléments de retenue (95) des éléments de traverse (91, 94) sont réalisés sous forme de crochets d'encliquetage, d'ergots d'encliquetage et similaires.

9. Système de barres conductrices selon l'une quelconque des revendications précédentes, **caractérisé en ce que** les éléments de retenue (95) des éléments de traverse (91, 94) sont réalisés en contre-dépouille, en forme de queue d'aronde et similaire.

10. Système de barres conductrices selon l'une quelconque des revendications précédentes, **caractérisé en ce que** les moyens (100) sont disposés à distance de l'élément de retenue (95) de l'élément de traverse (91, 94).

11. Système de barres conductrices selon l'une quelconque des revendications précédentes, **caractérisé en ce que** les moyens (100) sont réalisés sous forme de leviers disposés à côté de l'élément de retenue (95).
